# EUROPEAN PATENT APPLICATION

(11) **EP 4 640 531 A1**
(43) Date of publication of application: **29.10.2025**
(21) Application number: 23907607.8
(22) Date of filing: 15.12.2023
(51) Int. Cl.: B62D 25/02, B62D 21/15, B62D 29/00

(54) **SIDE SILL FOR VEHICLE**

(30) Priority: 20.12.2022 KR 20220179142
(71) Applicant: POSCO Co., Ltd, Pohang-si, Gyeongsangbuk-do 37859 (KR)
(72) Inventor: LEE, Gyu-Min, Incheon 21985 (KR)
(74) Representative: Meissner Bolte Partnerschaft mbB
(86) International application number: PCT/KR2023/020710
(87) International publication number: WO 2024/136321

(57) **Abstract**

The purpose of a side sill for a vehicle according to an embodiment of the present invention is to improve the impact energy absorption efficiency of the side sill and to achieve light-weight, and the side sill for the vehicle comprises: a side sill frame which extends in a first direction and has a hollow cavity part; and a reinforcement frame which is arranged in the hollow cavity part and includes a plurality of unit patterns extending in the first direction, wherein the unit patterns each comprise a plane portion arranged on a plane formed in the first direction and a second direction crossing the first direction, and an inclined portion connected to the plane portion and arranged to be inclined with respect to the plane portion, and at least one of the plane portion and the inclined portion includes a bent portion extending in the second direction.

## Description

### Technical Field

The present disclosure relates to a side sill for a vehicle.

### Background Art

It is to be noted that contents described in this section simply provide background information on the present disclosure and do not constitute prior art.

A side sill for a vehicle serves to absorb collision energy in the event of a lateral collision, to protect a passenger.

A side sill applied to an eco-friendly vehicle such as an electric vehicle protects not only a passenger but also a battery located in a floor. In the battery, since a volume thereof is relatively large, as compared to other components of the vehicle, a side space of the vehicle equipped with the battery may be relatively narrow, as compared to a vehicle equipped with an internal combustion engine.

Therefore, a side sill applied to an eco-friendly vehicle should be able to absorb maximum collision energy in a narrow space, and should have a minimum weight in order to improve energy efficiency of the eco-friendly vehicle.

To this end, an aluminum extrusion material has been applied to the side sill of the eco-friendly vehicle, but there is continuing demand for improved collision energy absorption capacity and a reduction in weight.

(Patent Document 1) KR 20-1998-0043143 U (1998.09.25)

### Summary of Invention

### Technical Problem

The present disclosure aims to improve collision energy absorption efficiency of a side sill and achieve a reduction in weight of the side sill.

The present disclosure aims to increase rigidity of a side sill and reduce manufacturing costs.

### Solution to Problem

As an aspect for achieving the above-mentioned purpose, a side sill for a vehicle according to an embodiment of the present disclosure includes a side sill frame extending in a first direction and including a hollow cavity portion; and a reinforcement frame disposed in the hollow cavity portion and including a plurality of unit patterns extending in the first direction, wherein each of unit patterns includes a plane portion disposed on a plane formed in the first direction and a second direction, crossing the first direction, and an inclined portion connected to the plane portion and disposed to be inclined, relative to the plane portion, and wherein at least one of the plane portion or the inclined portion includes a bent portion extending in the second direction.

In addition, the plane portion may include a first plane portion disposed in the first direction, and a second plane portion disposed in the first direction and located in a lower position than the first plane portion, and wherein the inclined portion may include a first inclined portion connected to the first plane portion and disposed to be inclined, and a second inclined portion connected to the second plane portion and disposed to be inclined.

In addition, the bent portion may be formed in a central portion of the first plane portion, a central portion of the first inclined portion, a central portion of the second plane portion, or a central portion of the second inclined portion.

In addition, the bent portion may be formed by two or more consecutive curved shapes to form a wave shape.

In addition, the bent portion may be formed to protrude or to be concave in a direction, perpendicular to a planar surface of the first plane portion, a planar surface of the second plane portion, a planar surface of the first inclined portion, or a planar surface of the second inclined portion.

In addition, the first plane portion and the side sill frame may be spaced apart from each other, and the second plane portion and the side sill frame may be spaced apart from each other.

In addition, the reinforcement frame may be formed of a single steel plate.

In addition, the first plane portion, the second plane portion, the first inclined portion, and the second inclined portion may be formed in a unit pattern, and the unit pattern may be repeated in the first direction.

In addition, a length of the side sill frame of the first plane portion and the second plane portion in the first direction may be 40 mm to 70 mm.

In addition, an angle formed by an extension line of the first plane portion or an extension line of the second plane portion and the first inclined portion or the second inclined portion may be 45° to 75°.

In addition, a thickness of the reinforcement frame may be 1.8 mm to 2.2 mm.

In addition, the reinforcement frame may be a steel material having a tensile strength or a yield strength, equal to or greater than that of the side sill frame, and the reinforcement frame may have a tensile strength of 1180 MPa or more and a yield strength of 850 MPa to 1060 MPa.

### Advantageous Effects of Invention

According to the present disclosure, collision energy absorption efficiency of a side sill may be improved, and the side sill may be formed to be weight-light.

According to the present disclosure, rigidity of a side sill may increase, and manufacturing costs may be reduced.

### Brief Description of Drawings

FIG. 1 is a perspective view of a side sill for a vehicle according to an embodiment of the present disclosure.
FIG. 2 is a perspective view of a reinforcement frame according to an embodiment of the present disclosure.
FIG. 3 is a cross-sectional view of FIG. 1, taken along line I-I'.
FIG. 4 is a cross-sectional view of a side sill for a vehicle according to another embodiment of the present disclosure, corresponding to a portion of FIG. 1, taken along line I-I'.
FIG. 5 is a cross-sectional view of a side sill for a vehicle according to another embodiment of the present disclosure, corresponding to a portion of FIG. 1, taken along line I-I'.
FIG. 6 is a cross-sectional view illustrating a reinforcement frame of a side sill for a vehicle according to another embodiment of the present disclosure.
FIG. 7 is a cross-sectional view illustrating a reinforcement frame of a side sill for a vehicle according to another embodiment of the present disclosure.
FIG. 8 is a cross-sectional view in which a reinforcement frame is formed according to another embodiment of the present disclosure.
FIG. 9 is a cross-sectional view of a conventional side sill for a vehicle.
FIG. 10 is a load-displacement diagram of the side sill for a vehicle of FIG. 1 and the side sill for a vehicle of FIG. 9.

### Best Mode for Invention

In order to help understanding description of embodiments of the present disclosure, elements described with the same reference numerals in the attached drawings are the same elements, and related components among components performing the same function in each of the embodiments may be indicated with numbers on the same or extended line.

In addition, in order to clarify the gist of the present disclosure, descriptions of elements and techniques well known by conventional techniques will be omitted, and the present disclosure will be described in detail below with reference to the attached drawings.

However, the idea of the present disclosure is not limited to an embodiment to be presented, and it is to be noted that other forms in which specific components are added, changed, or deleted by those skilled in the art may be proposed, but this may be also included within the scope of the same idea as the present disclosure.

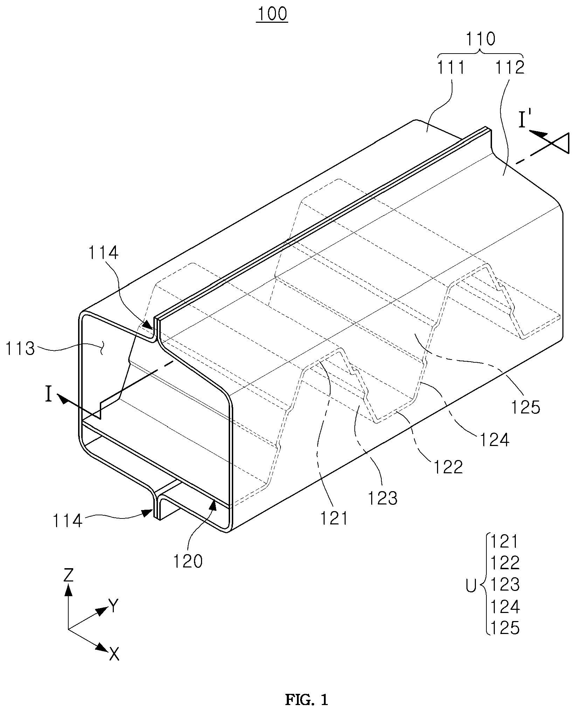

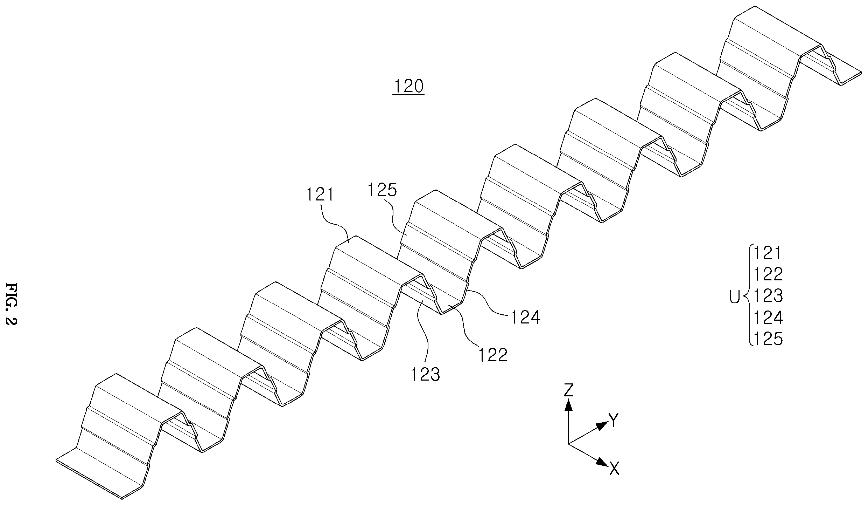

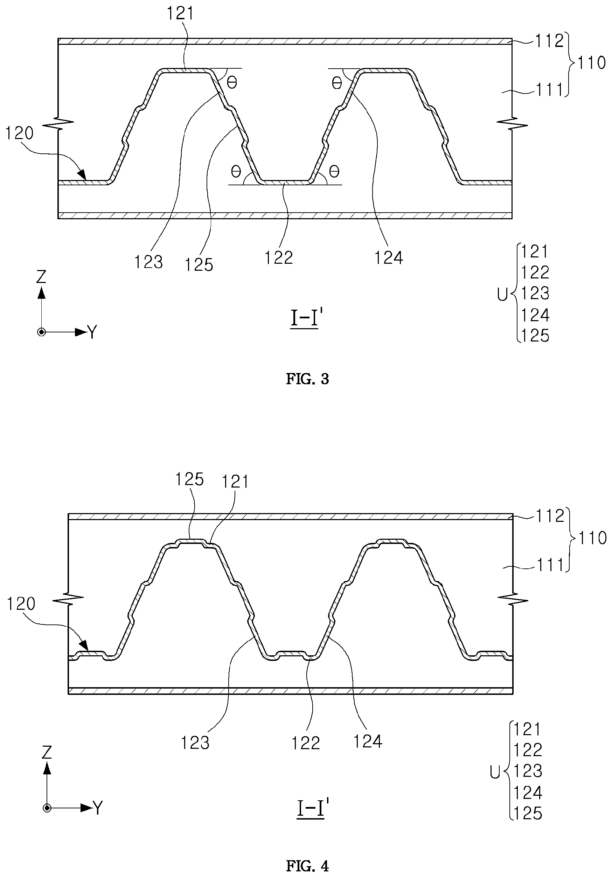

FIG. 1 is a perspective view of a side sill for a vehicle according to an embodiment of the present disclosure, and FIG. 2 is a perspective view of a reinforcement frame according to an embodiment of the present disclosure. FIG. 3 is a cross-sectional view of FIG. 1, taken along line I-I' .

A side sill 100 for a vehicle according to an embodiment of the present disclosure may include a side sill frame 110 having a hollow cavity portion 113, and a reinforcement frame 120 located in the hollow cavity portion 113.

The side sill frame 110 may have the hollow cavity portion 113 formed therein, and the hollow cavity portion 113 may be formed continuously in a first direction (Y-axis direction) which may be a length direction of the side sill frame 110.

The side sill frame 110 may be formed by combining a first side sill frame 111 and a second side sill frame 112.

The first side sill frame 111 and the second side sill frame 112 may have bent portions, and flange portions may be formed on both end portions. In addition, a coupling portion 114 combined by contacting each flange portions formed in the first side sill frame 111 and the second side sill frame 112 may be formed.

A coupled portion of the first side sill frame 111 and the second side sill frame 112 in which the coupling portion 114 is formed may be specifically formed by joining. However, a method of coupling is not limited, and may include all methods by which the first side sill frame 111 and the second side sill frame 112 are coupled and fixed.

In this application, the term "joining" used may be used to mean all coupling methods such as arc welding, resistance welding, adhesive joining, friction joining, FDS (flow drill screw) joining, rivet joining, laser welding, or the like.

In addition, the first side sill frame 111 and the second side sill frame 112 may be formed by bending a single plate. That is, the first side sill frame 111 and the second side sill frame 112 may be processed, respectively, as a single plate.

In addition, the first side sill frame 111 and the second side sill frame 112 may be formed by extrusion.

For example, the first side sill frame 111 may be formed to have an angular shape by extrusion, and the second side sill frame 112 may be formed to have an angular shape by extrusion, respectively.

As another example, the first side sill frame 111 and the second side sill frame 112 may be formed at once by extrusion as one piece.

The hollow cavity portion 113 may be formed therein in a state in which the first side sill frame 111 and the second side sill frame 112 are joined to each other.

The reinforcement frame 120 may be disposed in the hollow cavity portion 113, and may be formed continuously in the first direction, which may be the length direction of the side sill frame 110. In addition, at least a portion of the reinforcement frame 120 may be formed parallel to a second direction (X-axis direction), which may be a width direction of the vehicle, at one point in the first direction. The reinforcement frame 120 may include a plurality of unit patterns U.

According to an embodiment of the present disclosure, a unit pattern U included in the reinforcement frame 120 may include a plane portion (121 and 122) disposed on a plane formed in the first direction and the second direction, crossing the first direction, and an inclined portion (123 and 124) connected to the plane portion (121 and 122) and disposed to be inclined with respect to the plane portion (121 and 122).

For example, the plane portion (121 and 122) may include a first plane portion 121 and a second plane portion 122, and the inclined portion (123 and 124) may include a first inclined portion 123 and a second inclined portion 124.

The unit pattern U may include the first plane portion 121 located parallel to the first direction of the side sill frame 110, the first inclined portion 123 connected to the first plane portion 121 and disposed to be inclined, the second plane portion 122 connected to the first inclined portion 123 and located in a lower position than the first plane portion 121, and the second inclined portion 124 connected to the second plane portion 122 and formed to be inclined. In addition, the second inclined portion 124 may be formed symmetrically with the first inclined portion 123.

In this case, the first plane portion 121 and the second plane portion 122 may be portions formed parallel to the second direction at one point in the first direction.

The reinforcement frame 120 may be formed by repeatedly forming the first plane portion 121, the second plane portion 122, the first inclined portion 123, and the second inclined portion 124, which may be plane portions and inclined portions.

By forming in this manner, the side sill frame 110 may have a light-weight structure while improving an effect of collision absorption for lateral collision.

In addition, the first plane portion 121 and the second plane portion 122 are not limited to a specific length, but as an example, a length of the side sill frame 110 of the first plane portion 121 and the second plane portion 122 in the first direction may be 40 mm to 70 mm. When the length of the first plane portion 121 and the second plane portion 122 in the first direction is less than 40 mm, a repetition cycle of the unit pattern U in a unit section of the reinforcement frame 120 becomes shorter. Therefore, as an amount of a material to be used increases, weight may increase, which may have a negative effect on weight reduction.

When the length of the first plane portion 121 and the second plane portion 122 in the first direction exceeds 70 mm, resistance to deformation of the first plane portion 121 and the second plane portion 122 may decrease, and a repetition cycle of the unit pattern U of the reinforcement frame 120 may be longer. Therefore, a resistance portion resisting deformation may decrease, resulting in a decrease in performance of collision energy absorption efficiency.

In addition, the first plane portion 121 and the second plane portion 122 may have the same length in the first direction, but are not limited to the same length.

In addition, as an example, a thickness of the reinforcement frame 120 may be a value of 1.8 mm to 2.2 mm.

When the thickness of the reinforcement frame 120 is less than 1.8 mm, resistance to deformation of the reinforcement frame 120 may decrease, resulting in a decrease in performance of collision energy absorption efficiency. When the thickness of the reinforcement frame 120 exceeds 2.2 mm, there may be a problem in that an effect of weight reduction is reduced due to an increase in weight of the reinforcement frame 120.

According to an embodiment of the present disclosure, the side sill frame 110 and the first plane portion 121 may be formed to be spaced apart from each other, and the side sill frame 110 and the second plane portion 122 may be formed to be spaced apart from each other.

The reinforcement frame 120 may be spaced apart from upper and lower surfaces of the side sill frame 110, respectively. By being spaced apart, when an impact is applied in the second direction, which may be a lateral direction of a vehicle body, or the like, the reinforcement frame 120 may be disposed in a central area of a third direction (Z-axis direction), which may be a height direction of the vehicle body, to implement a maximum deformation load. Therefore, an effect of maximally achieving vehicle weight reduction while improving collision energy absorption efficiency may be provided.

An angle between the inclined surface and the planar portion, e.g., an angle formed by an extension line of the first plane portion 121 or the second plane portion 122 and the first inclined portion 123 or the second inclined portion 124, may be a value of 45° to 75°. When an angle (θ) formed by the extension line of the second plane portion 122 and the first inclined portion 123 or the second inclined portion 124 is less than 45°, a repetition cycle of the unit pattern U of the reinforcement frame 120 may be longer. Therefore, a resistance portion resisting deformation may decrease, resulting in a decrease in performance of collision energy absorption efficiency. Similarly, when an angle (θ) formed by the extension line of the first plane portion 121 and the first inclined portion 123 or the second inclined portion 124 is less than 45°, the same decrease in performance of collision energy absorption efficiency may occur.

When an angle (θ) formed by the extension line of the second plane portion 122 and the first inclined portion 123 or the second inclined portion 124 exceeds 75°, a repetition cycle of the unit pattern U of the reinforcement frame 120 may be shorter. Therefore, as an amount of a material to be used increases, weight may increase, which may have a negative effect on weight reduction. Similarly, when an angle (θ) formed by the extension line of the first plane portion 121 and the first inclined portion 123 or the second inclined portion 124 exceeds 75°, a negative effect on weight reduction may occur. However, it is not limited to the angle, and as mentioned above, when a planar surface and an inclined surface are formed, it may be sufficient.

According to an embodiment of the present disclosure, the reinforcement frame 120 may be formed of a single steel plate.

The reinforcement frame 120 may be formed by bending a single steel plate. Since the reinforcement frame 120 may be manufactured with the single steel plate, mechanical strength of the reinforcement frame 120 may be further improved, and it may contribute to reducing manufacturing costs.

In addition, the reinforcement frame 120 may be a steel material having a tensile strength or a yield strength, equal to or greater than that of the side sill frame 110. As an example, the reinforcement frame 120 may have a tensile strength of 1180 MPa or more. As an example, the reinforcement frame 120 may have a yield strength of 850 MPa to 1060 MPa. Alternatively, when the side sill frame 110 and the reinforcement frame 120 are formed of the same steel material, the tensile strength and the yield strength may be the same.

When the reinforcement frame 120 is formed of a steel material, it may be manufactured to have a tensile strength of 1180 MPa or more and a yield strength of 850 MPa to 1060 MPa. The side sill 100 for a vehicle including the reinforcement frame 120 formed in this manner may have collision energy absorption capacity, that may be at least equal to or exceed collision energy absorption capacity of a side sill 100 for a vehicle formed of aluminum having the same weight.

Therefore, compared to when a material of the side sill is aluminum, a side sill 100 according to an embodiment of the present disclosure may be lightweight while improving collision energy absorption efficiency on the same or higher level.

According to an embodiment of the present disclosure, one side of the reinforcement frame 120 may be joined to the first side sill frame 111, for example, by arc welding. In addition, the other side of the reinforcement frame 120 may be bonded to the second side sill frame 112 by an adhesive or joined, for example, by arc welding. By being welded or bonded in this manner, convenience of a manufacturing operation of the side sill 100 for a vehicle may be improved.

According to an embodiment of the present disclosure, the side sill 100 for a vehicle may improve lateral impact absorption capacity as the side sill for a vehicle is compressed and deformed in the second direction when a load is applied in the second direction, which may be a lateral direction of the vehicle. Therefore, transmission of impact to a space in which a vehicle battery is located (not illustrated) and a space in which a passenger is located may be minimized.

According to an embodiment of the present disclosure, at least one of the plane portion (121 and 122) or the inclined portion (123 and 124) formed in the reinforcement frame 120 may include a bent portion 125 extending in the second direction. The bent portion 125 may be formed to extend in the second direction. The reinforcement frame 120 may be formed with the bent portion 125 extending in the second direction, when viewed from the first direction.

The bent portion 125 may have a curved shape in a cross-section when viewed from the second direction, and may be a straight line in a cross-section with a protruding or concave shape when viewed from the first direction .

The cross-sectional shape of the bent portion 125 when viewed from the second direction may be a shape in which a first surface inclined, a second surface symmetrical to the first surface, and a third surface existing between the first surface and the second surface and parallel to a portion of the unit pattern U on which the bent portion 125 is formed may be continuously and smoothly connected.

In addition, a boundary of the third side may not be distinguished, and in this case, may have a shape in which the first surface and the second surface are connected as a curved shape. A shape of the bent portion 125 is not limited to the mentioned shape, and may include all shapes formed in a straight line in a certain section in a protruding or concave shape in the second direction.

The bent portion 125 may be formed through a beading process. By molding a sheet metal by beading, a bead, which may be a line-shaped bent portion 125, may be formed on a planar sheet metal or a molded sheet metal.

In addition, the bent portion 125 may be parallel to the second direction, and may be formed at a predetermined angle with respect to the second direction. Therefore, when viewed from the first direction, a straight curved shape may be formed in the second direction.

Since the bent portion 125 may be formed on the reinforcement frame 120, rigidity of the reinforcement frame 120 may be further increased. In addition, as a height or a depth of the bent portion 125 increase, an effect of increasing the rigidity may increase.

According to an embodiment of the present disclosure, the bent portion 125 may be formed in at least one of the first plane portion 121, the second plane portion 122, the first inclined portion 123, or the second inclined portion 124.

The bent portion 125 may be formed in the reinforcement frame 120 to absorb impact of the first direction, which may be a lateral collision, as much as possible, and may be formed in at least one of the first plane portion 121, the second plane portion 122, the first inclined portion 123, or the second inclined portion 124 of the reinforcement frame 120.

As an example, referring to FIGS. 1 to 3, a shape in which the bent portion 125 is formed in the first inclined portion 123 and the second inclined portion 124 is illustrated.

However, a shape of the bent portion 125 is not limited to the shape described above, and may be sufficient if it is formed in the reinforcement frame 120.

To list them, the bent portion 125 may be formed in one of the first plane portion 121, the second plane portion 122, the first inclined portion 123, or the second inclined portion 124. Alternatively, the bent portion 125 may be formed in two portions, namely, the first plane portion 121 and the second plane portion 122, the first plane portion 121 and the first inclined portion 123, the first plane portion 121 and the second inclined portion 124, the second plane portion 122 and the first inclined portion 123, the second plane portion 122 and the second inclined portion 124, or the first inclined portion 123 and the second inclined portion 124. In addition, the bent portion 125 may be formed in three portions: the first plane portion 121, the second plane portion 122, and the first inclined portion 123; the first plane portion 121, the second plane portion 122, and the second inclined portion 124; the first plane portion 121, the first inclined portion 123, and the second inclined portion 124; or the second plane portion 122, the first inclined portion 123, and the second inclined portion 124, or the bent portion 125 may be formed in all four portions.

According to an embodiment of the present disclosure, the first plane portion 121, the second plane portion 122, the first inclined portion 123, and the second inclined portion 124 may be formed as a unit pattern U, and the unit pattern U may be repeated in the first direction.

For example, the bent portion 125 may also be included in the unit pattern U.

The bent portion 125 may be included in the unit pattern U, together with the first plane portion 121, the second plane portion 122, the first inclined portion 123, and the second inclined portion 124, and the bent portion 125 may be formed in a combination as described above, and may be repeated. When the bent portion 125 is repeatedly formed, certain rigidity may be imparted, and the beading operation may be performed in a certain pattern, thereby increasing convenience of the operation.

However, since the bent portion 125 is not limited to being repeatedly formed in the same position, the bent portion 125 may not be repeated, and in the repeated unit pattern U of the reinforcement frame 120, it may be sufficient to include at least one bent portion 125, and a position at which the bent portion 125 is formed may be different each time the bent portion 125 is repeated.

According to an embodiment of the present disclosure, the bent portion 125 may be formed in a central portion of the first plane portion 121, a central portion of the second plane portion 122, a central portion of the first inclined portion 123, or a central portion of the second inclined portion 124.

To stably perform a beading process, the bent portion 125 may be formed in a central portion of a surface of a portion to be formed.

In a case in which there is a structure protruding into the side sill frame 110 or a structurally overlapping portion is formed, the bent portion 125 may not be formed in a central portion, but may be formed in the central portion for convenient processing. However, even in the absence of the special circumstances mentioned, the bent portion 125 may be formed in a position other than the central portion, and is not limited to the position mentioned. That is, the bent portion 125 may be formed as a beading structure in various positions depending on the design.

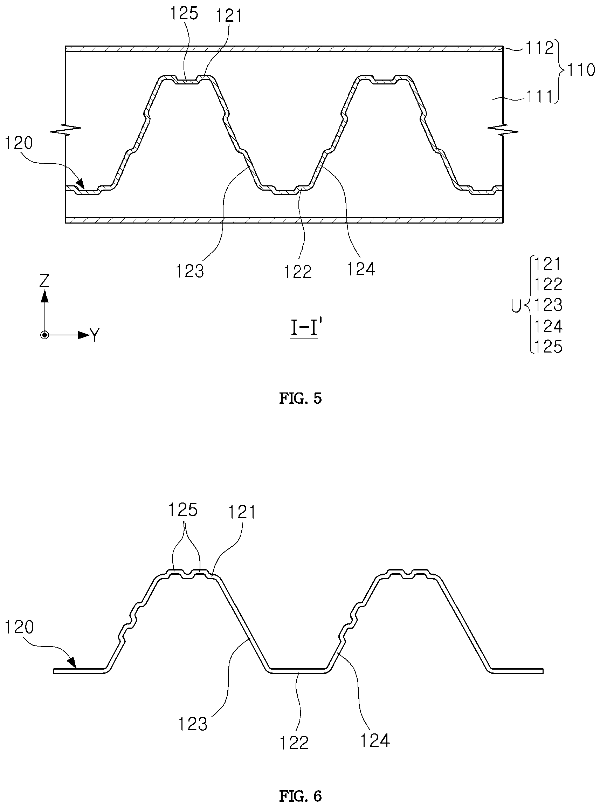

FIGS. 4 and 5 illustrate cross-sectional views of a reinforcement frame formed according to another embodiment of the present disclosure.

According to an embodiment of the present disclosure, a bent portion 125 may be formed to protrude or be concave in the vertical direction on a planar surface of a first plane portion 121, a planar surface of a second plane portion 122, a planar surface of a first inclined portion 123, or a planar surface of a second inclined portion 124.

As mentioned above, a surface on which the bent portion 125 is formed may be one of the first plane portion 121, the second plane portion 122, the first inclined portion 123, or the second inclined portion 124, and at least a portion of these components may be formed to be planar. In this view, the bent portion 125 may be formed to protrude or be concave in the vertical direction.

As an example, referring to FIG. 4, the bent portion 125 may be formed to protrude on all of the first plane portion 121, the second plane portion 122, the first inclined portion 123, and the second inclined portion 124. As another example, referring to FIG. 5, the bent portion 125 may be formed to be concave on all of the first plane portion 121, the second plane portion 122, the first inclined portion 123, and the second inclined portion 124.

As illustrated in FIGS. 4 and 5, the bent portion 125 may be formed to protrude or be concave.

The bent portion 125 may be formed by beading with a beading machine. The beading machine may apply an impact vertically to a plate surface, to form a bead. In addition, the bent portion 125 that may be formed as a bead may be a straight protrusion or concave shape in the vertical direction from a formed surface. When formed as the protrusion or concave portion in the vertical direction, effect of increasing strength of a reinforcement frame 120, and strengthening resistance of a side sill against lateral collision may be provided.

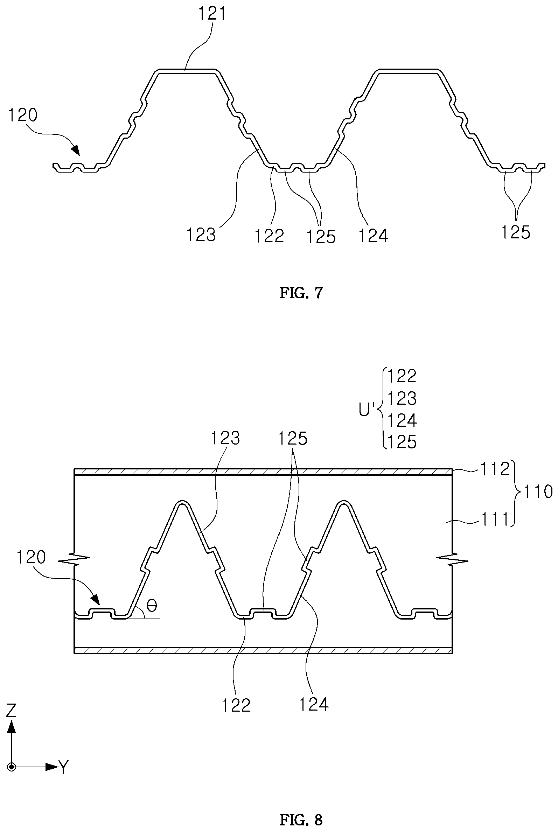

FIGS. 6 and 7 illustrate a reinforcement frame according to another embodiment of the present disclosure. FIG. 6 illustrates a reinforcement frame 120 in which a bent portion 125 is formed in two places, a first plane portion 121 and a second inclined portion 124, and FIG. 7 illustrates a reinforcement frame 120 in which a bent portion 125 is formed in two places, a first inclined portion 123, a second inclined portion 124, and a second plane portion 122, and illustrates a case in which the bent portion 125 has a wave shape.

According to an embodiment of the present disclosure, a bent portion 125 may be formed in a wave shape by continuously forming two or more curved shapes in a certain section.

The bent portion 125 may be formed in a single curved shape, but may also be formed in a wave shape by continuously forming curved shapes.

When formed in a wave shape, the number of consecutive times is not limited unless a height or a depth of the curved shape may be too low or shallow to have no reinforcing effect.

The effect of providing additional rigidity by the bent portion 125 may be provided, but a height or a depth of the bent portion 125 and the number of the bent portions 125 may need to be compromised depending on a thickness and a shape of a reinforcement frame 120. In this case, since rigidity may be added more by a height or a depth than by the number of the bent portions 125, the number of consecutive times may be set taking this into consideration.

In addition, without being limited to the embodiment, a concave bent portion 125 and a protruding bent portion 125 may be formed together in one reinforcement frame 120, and a protruding shape and a concave shape may be formed together even in one unit pattern U. In addition, when the bent portion 125 is located in two or more portions among a first plane portion 121, a second plane portion 122, a first inclined portion 123, or a second inclined portion 124, the number of consecutive bent portions 125 formed in a portion corresponding thereto may be formed differently.

FIG. 8 illustrates a cross-sectional view of a reinforcement frame formed according to another embodiment of the present disclosure.

According to an embodiment of the present disclosure, a unit pattern U' may be configured such that a plane portion may be composed only of a second plane portion 122, an inclined portion (123 and 124) may include a first inclined portion 123 and a second inclined portion 124, and a bent portion 125 may be located in at least one of the second plane portion 122, the first inclined portion 123, or the second inclined portion 124. That is, the bent portion 125 may be located only on the second plane portion 122, the first inclined portion 123, or the second inclined portion 124, or may be located on two of the second plane portion 122, the first inclined portion 123, or the second inclined portion 124, or may be located on all of the second plane portion 122, the first inclined portion 123, and the second inclined portion 124. In addition, unlike the embodiments, since a first plane portion 121 may not be included, the first inclined portion 123 and the second inclined portion 124 may be formed by contacting each other.

Even in this case, the number of bending portions 125 is not limited, and the same configuration and effect as mentioned above may be cited.

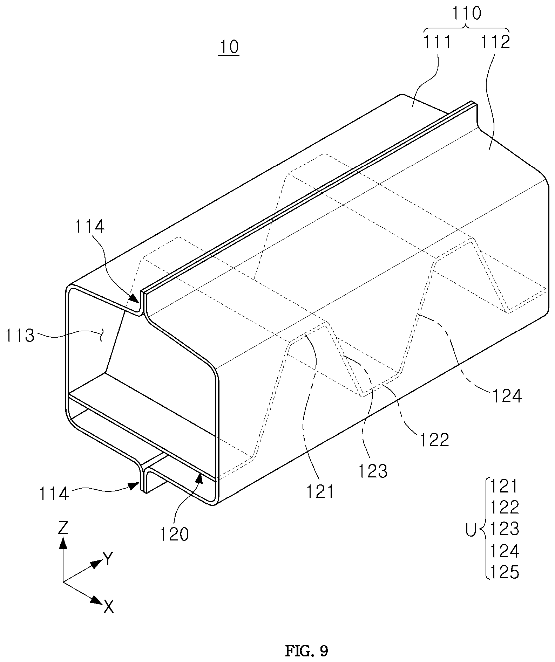

FIG. 9 illustrates a perspective view of a side sill including a conventional reinforcement frame.

A conventional side sill 10 may be configured such that, like a side sill of an embodiment of the present disclosure, a side sill frame 110 may include a first side sill frame 111 and a second side sill frame 112, and a reinforcement frame 120 may be configured such that a first plane portion 121, a second plane portion 122, a first inclined portion 123, and a second inclined portion 124 may be repeated to form a unit pattern U. However, a bent portion 125 may not be included.

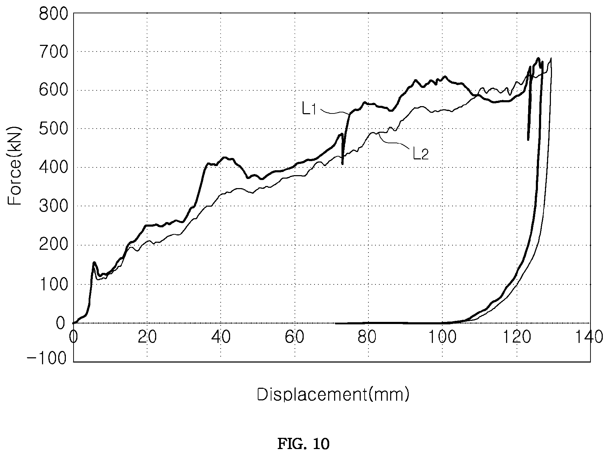

FIG. 10 illustrates a load-displacement diagram of the side sill for a vehicle (100 of FIG. 1) according to an embodiment of the present disclosure, illustrated in FIG. 1, and the conventional side sill for a vehicle (10 of FIG. 9), illustrated in FIG. 9.

In FIG. 10, a load-displacement value of the side sill for a vehicle (100 of FIG. 1) according to the present disclosure, illustrated in FIG. 1, may be represented as a first value L1, and a load-displacement value of the conventional side sill for a vehicle (10 of FIG. 9) illustrated in FIG. 9 may be represented as a second value L2.

Referring to the first value L1 and the second value L2, it can be seen that the side sill for a vehicle (100 of FIG. 1) illustrated in FIG. 1 has a relatively smaller displacement than the conventional side sill for a vehicle (10 of FIG. 9) illustrated in FIG. 9, under the same load.

In addition, referring to the facts that a cross-sectional structure of the side sill for a vehicle (100 in FIG. 1) according to the present disclosure includes a bent portion 125 in a cross-sectional structure of the conventional side sill for a vehicle (10 in FIG. 9), such that materials thereof are the same, and only the bent portion 125 is added in view of the configuration, it can be seen that the side sill for a vehicle according to an embodiment of the present disclosure has significantly improved collision energy absorption capacity, as compared to the conventional side sill for a vehicle.

In addition, according to the test result values, the side sill for a vehicle (100 in FIG. 1) according to the present disclosure has an energy of 51.2 KJ that may be absorbed when a weight thereof is 15.9 kg, and collision energy absorption capacity per unit weight (internal energy ratio (KJ/kg) per 1 kg) is 3.21%, and the conventional side sill for a vehicle (10 in FIG. 8) has an energy of 48.0 KJ that may be absorbed when a weight thereof is 15.8 kg, and collision energy absorption capacity per unit weight (internal energy ratio (KJ/kg) per 1 kg) is 3.03%. Therefore, it can be seen that the side sill for a vehicle according to the present disclosure has better collision energy absorption capacity, when having a similar weight to the conventional side sill for a vehicle.

According to the present disclosure in this manner, the side sill for a vehicle may be formed lighter than a conventional aluminum structure, while collision energy absorption capacity thereof may be improved than a case in which the conventional bent portion 125 is not formed.

In addition, by disposing the reinforcement frame 120 in an optimal position in the side sill frame 110, maximum collision energy absorption capacity may be realized with the minimum number of reinforcement frames 120 and a minimum weight of the reinforcement frame 120.

The above-described matters may be described with respect to an embodiment of the present disclosure, and the scope of the rights of the present disclosure is not limited thereto, and it will be obvious to those skilled in the art that various modifications and variations are possible within a scope that does not depart from the technical idea of the present disclosure described in the claims.

### Description of Reference Characters

10: Conventional Side Sill
100: Side Sill
110: Side Sill Frame
111: First Side Sill Frame
112: Second Side Sill Frame
113: Hollow Cavity Portion
114: Coupling Portion
120: Reinforcement Frame
121: First Plane Portion
122: Second Plane Portion
123: First Inclined Portion
124: Second Inclined Portion
125: Bent Portion
U,U': Unit Pattern

## Claims

1. A side sill for a vehicle comprising:
a side sill frame extending in a first direction and including a hollow cavity portion; and
a reinforcement frame disposed in the hollow cavity portion and including a plurality of unit patterns extending in the first direction,
wherein each of unit patterns includes:
a plane portion disposed on a plane formed in the first direction and a second direction, crossing the first direction, and
an inclined portion connected to the plane portion and disposed to be inclined, with respect to the plane portion, and
wherein at least one of the plane portion or the inclined portion includes a bent portion extending in the second direction.

2. The side sill of claim **1,** wherein the plane portion includes:
a first plane portion disposed in the first direction, and
a second plane portion disposed in the first direction and located in a lower position than the first plane portion, and
wherein the inclined portion includes:
a first inclined portion connected to the first plane portion and disposed to be inclined, and
a second inclined portion connected to the second plane portion and disposed to be inclined.

3. The side sill of claim **2,** wherein the bent portion is located in a central portion of the first plane portion, a central portion of the first inclined portion, a central portion of the second plane portion, or a central portion of the second inclined portion.

4. The side sill of claim 2, wherein the bent portion is formed by two or more consecutive curved shapes to form a wave shape.

5. The side sill of claim **2,** wherein the bent portion is formed to protrude or to be concave in a direction, perpendicular to a planar surface of the first plane portion, a planar surface of the second plane portion, a planar surface of the first inclined portion, or a planar surface of the second inclined portion.

6. The side sill of claim 2, wherein the first plane portion and the side sill frame are spaced apart from each other, and the second plane portion and the side sill frame are spaced apart from each other.

7. The side sill of claim 1, wherein the reinforcement frame is formed of a single steel plate.

8. The side sill of any one of claims 2 to 6, wherein the first plane portion, the second plane portion, the first inclined portion, and the second inclined portion are formed in a unit pattern, and the unit pattern is repeated in the first direction.

9. The side sill of any one of claims 2 to 6, wherein alength of the side sill frame of the first plane portion and the second plane portion in the first direction is 40 mm to 70 mm.

10. The side sill of any one of claims 2 to 6, wherein an angle formed by an extension line of the first plane portion or an extension line of the second plane portion and the first inclined portion or the second inclined portion is 45° to 75°.

11. The side sill of claim 1, wherein a thickness of the reinforcement frame is 1.8 mm to 2.2 mm.

12. The side sill of claim 1, wherein the reinforcement frame is a steel material having a tensile strength or a yield strength, equal to or greater than that of the side sill frame, and
the reinforcement frame has a tensile strength of 1180 MPa or more and a yield strength of 850 MPa to 1060 MPa.
